(19) Europäisches Patentamt
European Patent Office
Office européen des brevets

(11) **EP 1 549 477 B2**

(12) **NEW EUROPEAN PATENT SPECIFICATION**

After opposition procedure

(45) Date of publication and mention
of the opposition decision:
**03.11.2010 Bulletin 2010/44**

(45) Mention of the grant of the patent:
**21.05.2008 Bulletin 2008/21**

(21) Application number: **03794051.7**

(22) Date of filing: **05.09.2003**

(51) Int Cl.:
**B29C 44/34** *(2006.01)*    **B29C 44/60** *(2006.01)*

(86) International application number:
**PCT/IT2003/000531**

(87) International publication number:
**WO 2004/022303 (18.03.2004 Gazette 2004/12)**

(54) **METHOD AND APPARATUS FOR FEEDING AN EXPANDING AGENT**

VERFAHREN UND VORRICHTUNG ZUM ZUFÜHREN EINES TREIBMITTELS

MÉTHODE ET APPAREIL POUR L'INTRODUCTION D'UN AGENT GONFLANT

(84) Designated Contracting States:
**AT BE BG CH CY CZ DE DK EE ES FI FR GB GR HU IE IT LI LU MC NL PT RO SE SI SK TR**

(30) Priority: **05.09.2002 IT BO20020563**

(43) Date of publication of application:
**06.07.2005 Bulletin 2005/27**

(73) Proprietor: **CGR S.r.l.**
**Reggio Emilia (IT)**

(72) Inventors:
• **FARABOLINI, Paolo**
**I-62010 Montecassiano (IT)**
• **RIVI, Giuliano**
**I-42019 Scandiano (IT)**

(74) Representative: **Baldi, Claudio et al**
**Ing. Claudio Baldi s.r.l.**
**Viale Cavallotti 13**
**P.O. Box 187**
**60035 Jesi (AN) (IT)**

(56) References cited:
**EP-A- 0 995 569    US-A- 4 246 230**
**US-A- 5 984 280**

EP 1 549 477 B2

**Description**

TECHNICAL FIELD

The present invention relates to a device for feeding an expanding agent.
In particular, the present invention relates to a device for feeding an expanding agent into a polymeric material processing machine; the polymeric material processing machine comprises a discharge nozzle for the discharge of a treated polymeric material. The device for feeding the expanding agent is able to add the expanding agent to the polymeric material thus causing its expansion.
The present invention finds an advantageous application in the field of polymeric material extrusion machines, to which the following discussion explicitly refers without it losing any of its generality for this reason.

BACKGROUND ART

During the operation of machines for extrusion, of known type, it is relatively difficult to obtain an extruded polymeric material having a basically constant density over time. In addition, each time there is a variation in the operating conditions (for example temperature and/or extrusion speed) of the machine and/or of the polymeric material and/or of the expanding agent, it is necessary to carry out relatively many trials to succeed in regulating the feeding of the expanding agent in order to obtain the extruded polymeric material with a density which is very close to the desired density.
EP0995569 A2 discloses a method for injection molding plastic molded parts from thermoplastic, comprises the following steps: the production of a thermoplastic melt through the rotation of a plasticizing and injection screw in a preplasticizing cylinder; the addition to the thermoplastic melt of a fluid by introducing the fluid into the preplasticizing cylinder; the mixing up the thermoplastic melt to which the fluid has been added, through the rotational motion of the plasticizing and injection screw; the injection of the mixture of thermoplastic melt and fluid into the cavity of an injection molding tool.

DISCLOSURE OF INVENTION

The object of the present invention is to achieve a device for feeding an expanding agent which is both without the drawbacks described above and, at the same time, which is inexpensive to produce.
In accordance with the present invention a machine is embodied for the extrusion of polymeric material according to that claimed in claim 1.
The present invention, in short, relates to a method for the extrusion of polymeric material.
In accordance with the present invention a method is provided for the extrusion of polymeric material according to that claimed by claim 5.

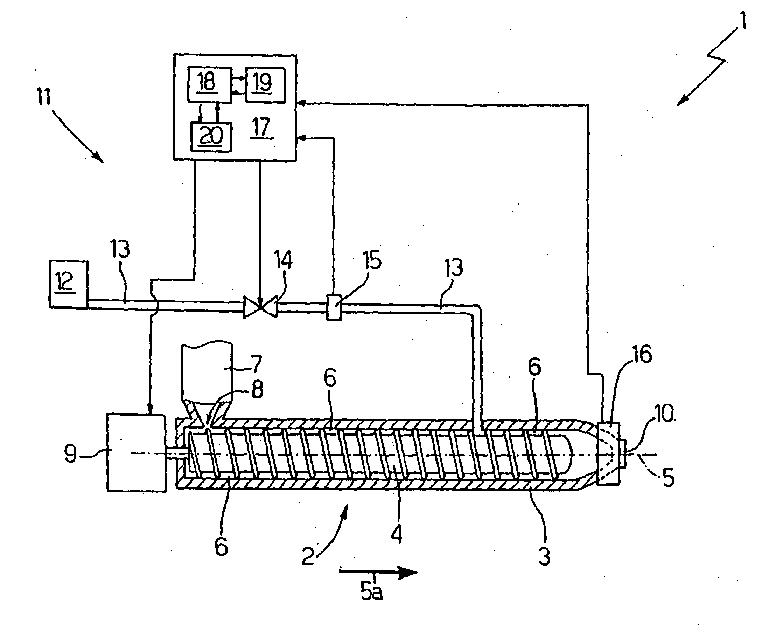

BRIEF DESCRIPTION OF THE DRAWING

The invention will now be described with reference to the enclosed figure, which illustrates a non-limiting embodiment example; in particular, the enclosed figure illustrates a schematic side view, and partly in section, of a machine for the extrusion of polymeric material made according to the present invention.

BEAST MODE FOR CARRYING OUT THE INVENTION

With reference to the enclosed figure, 1 denotes, as a whole, a machine for the extrusion of polymeric material including an extruder 2 which, in turn, comprises a cylinder 3 and a worm screw 4. The screw 4 is located inside the cylinder 3 and is able to rotate around its longitudinal axis 5 to convey the polymeric material inside a process space 6 defined between the screw 4 and the cylinder 3. The polymeric material, in use, is conveyed inside the space 6 in a feed direction 5a parallel to the axis 5. According to preferred embodiments, the polymeric material can contain nucleation agents of basically known type.
The extruder 2 also includes a hopper 7, which is able to feed the polymeric material inside the space 6 through an opening 8 of the cylinder 3, and a motor 9 able to rotate the screw 4. The cylinder 3 is delimited in its front portion by a discharge nozzle 10, through which, in use, an extruded polymeric material is discharged.
The machine 1 also includes a device 11 for feeding an expanding agent including a source 12 of the expanding agent and a feeding line 13 to convey the expanding agent coming from the source 12 inside the space 6 so that the expanding agent is added to the polymeric material. The device 11 also includes a balancing valve 14, which is located along the line 13 and is able to control the flow of the expanding agent in the line 13 (i.e. to regulate the pressure at which the expanding agent is fed into the extruder 2), and a pressure sensor 15, which is disposed along the line 13 after the balancing valve 14 and is able to measure the pressure at which the expanding agent is fed into the extruder 2. The device 11 also includes a pressure sensor 16, which is resistant to temperatures greater than 400°C, and is disposed at the nozzle 10 and is able to measure the pressure inside the space 6 at the nozzle 10.
It is important to underline that, during the extrusion of the polymeric material, the space 6 is kept at a temperature of between 160° and 400°C by heating units (of known type and not shown) and that, therefore, it is necessary that the sensor 16 is able to withstand such temperatures.
The expanding agent can be a mixture of substances or only one substance able to exert an expanding effect on the polymeric material. According to the preferred embodiments, the expanding agent is an inert gas, in particular nitrogen and/or carbon dioxide.
The machine 1 includes, in short, a control unit 17 electrically connected to the motor 9, to the sensors 15 and 16 and to the balancing valve 14. The control unit is able to control the balancing valve 14 depending on the pressures measured by the sensors 15 and 16 respectively. In particular, the control unit 17 is able to control the balancing valve 14 depending on the difference between the pressures measured by the sensors 15 and 16, preferably, on the basis of an inverse proportionality function of the first degree between the density of the extruded polymeric material and the difference between the pressures.

The inverse proportionality function of the first degree is of the type:

$$\Delta P = a/\delta + b$$

in which $\Delta P$ is the difference between the pressures measured by the sensors 15 and 16, $\delta$ is the density of the extruded polymeric material, a and b are constants; the values of the constants a and b depend both on the type of extruder 2, and the type of polymeric material used.

The control unit 17 includes a data input unit 18 for the entering of data, into the same control unit 17, relating to the density of an extruded polymeric material and a data processing unit 19 to process, during the setting procedures, the above-mentioned proportionality function (i.e. calculate a and b) on the basis of the data entered into the data input unit 18 and on the pressures measured by the sensors 15 and 16.

The data input unit 18 comprises, preferably, a keyboard and/or a pointing device (both of known type and not shown), by means of which an operator is able to manually enter the cited data relating to the density of the extruded polymeric material.

The control unit 17 includes, in short, a visual display unit 20 which comprises, preferably, a screen (of known type and not shown) and is able to visualize the data entered by the data input unit 18, the pressures measured by the sensors 15 and 16 and the function processed by the data processing unit 19.

In use, before starting the quantitative production of the extruded polymeric material, it is necessary to set the device 11 for each extruder 2 and type of polymeric material which one wishes to use. For this purpose some trials, preferably at least three, are carried out which result in the production of relatively small amounts of extruded polymeric material. During, and at the end of, each trial the data processing unit 19 receives the pressures measured by the sensors 15 and 16 and the densities of the extruded polymeric material entered by the operator.

At this stage, the data processing unit 19 by means of methods, known in themselves, processes the cited inverse proportionality function (i.e. calculates a and b).

It is important to underline that it is possible to carry out a large number of settings, each relating to an extruder 2 and a type of polymeric material.

After the setting has been performed, each time one wishes to obtain extruded polymeric material of a particular density, the operator enters the value of the particular desired density and the identification codes of the extruder 2 and the polymeric material into the control unit 17 by means of the data input unit 18.

At this stage, while the polymeric material is fed inside the space 6 and the motor 9 rotates the screw 4, the control unit 17, by controlling the balancing valve 14, varies the pressure at which the expanding agent is fed depending on the variations in the pressure measured by the sensor 16, so that the difference between the pressures measured respectively by the sensors 15 and 16 remains, during extrusion of the polymeric material, basically constant and equal to a particular value calculated through interpolation by the data processing unit 19 on the basis of the cited value of the particular desired density and the above-mentioned proportionality function.

In this manner, it is possible to obtain the extruded polymeric material with a density which is constant and basically identical to the desired density.

In addition, note that the mentioned proportionality function is stored by the control unit 17 and that, therefore, even after successive uses of the device 11 for additional and different extruders 2 and/or types of polymeric material it is possible to use the device 11, without additional need for setting, for the extruder 2 and the type of polymeric material for which it was previously set.

According to alternative embodiments the difference, between the pressures measured by the sensors 15 and 16 respectively necessary to obtain the value of particular desired density, is obtained by iterative methods (known in themselves) of tabular interpolation.

Moreover, it is important to underline that, according to additional embodiments, not shown, it is possible to use the device 11 to feed an expanding agent into a machine for the injection of polymeric material into a mould or into a machine for extrusion and blowing.

Furthermore, in an embodiment which is not shown, at least one device for the feeding of an expanding agent, object of the present invention, is part of a polymeric material processing machine for the production of co-extruded manufactured products, in which, as is known, two materials are used, one for the central portion of the manufactured product, and another for the exterior, if necessary possessing different mechanical and/or chemical properties.

**Claims**

1. Polymeric material processing machine (1), comprising a device (11) for feeding an expanding agent for a polymeric material processing machine (1); the polymeric material processing machine (1) comprising a cylinder (3) with a worm screw (4) and a discharge nozzle (10) delimiting the front portion of said cylinder (3) for the discharge of treated polymeric material; the device (11) for the feeding of expanding agent comprising:

balancing means (14) for regulating the feeding of the expanding agent,
a control unit (17) for controlling the balancing means (14),
a first measurement means (15) for measuring the pressure with which the expanding agent is fed, and
second measurement means (16) for measuring the pressure inside the processing machine (1); the control unit (17) is able to control said balancing means (14) as a function of the pressure measured by the first measurement means (15), of the pressure measured by the second measurement means (16) and of a given target density for the treated polymeric material; **characterised in that** the second measuring means (16) is located at the discharge nozzle (10) for measuring the pressure inside the processing machine (1) at the discharge nozzle (10) wherein said control unit (17) has data input means (18) to enter data relating to the density of the treated polymeric material and data processing means (19) to process a proportionality function between the density of the treated polymeric material and the difference between the pressure measured by the first measurement means (15) and the pressure measured by the second measurement means (16); the control unit (17) being able to control the balancing means (14) on the basis of said proportionality function.

2. Polymeric material processing machine (1) as in claim 1, wherein the control unit (17) is able to control the balancing means depending on the difference between the pressure measured by the first measurement means (15) and the pressure measured by the second measurement means (16).

3. Polymeric material processing machine (1) as in claim 1, wherein said proportionality function is an inverse proportionality function of the first degree.

4. Polymeric material processing machine (1) as in one of the preceding claims, wherein said balancing means (14) is able to regulate the feeding of the expanding agent.

5. Method for processing a polymeric material comprising:

a discharge step for extruding treated polymeric material through a cylinder (3) with a worm screw (4) and a discharge nozzle (10) delimiting the front portion of said cylinder (3),
a feeding step for adding the expanding agent to the polymeric material,
a first measurement step for measuring the pressure of the fed expanding agent;
the feeding step and the first measurement step being concurrent;
the method being **characterised in that** it comprises:

a second measurement step for measuring the pressure during the discharge step at said discharge nozzle (10), and
a balancing step to vary the difference between the pressure of the fed expanding agent and the pressure at the discharge nozzle (10) as a function of the pressures measured during said first and second measurement step and of a given target density of the treated polymeric material, and
a setting step to process a proportionality function between the density of the treated polymeric material and the difference between the pressure measured during the first measurement step and the pressure measured during the second measurement step; during said balancing step, the pressure of the fed expanding agent being regulated on the basis of said proportionality function.

6. Method as in claim 5, wherein the balancing step, the first and the second measurement steps are concurrent.

7. Method as in claim 5 or 6, wherein during said balancing step the pressure of the expanding agent is regulated as a function of the given target density and of the difference between the pressure measured during the first measurement step and the pressure measured during the second measurement step.

8. Method as in claim 7, wherein said proportionality function is an inverse proportionality function of the first degree.

9. Method as in one of the claims from 6 to 8, wherein during said balancing step the pressure of the fed expanding agent is regulated.

## Patentansprüche

1. Polymerwerkstoff-Verarbeitungsmaschine (1), umfassend eine Vorrichtung (11) zum Einspeisen eines Treibmittels für eine Polymerwerkstoff-Verarbeitungsmaschine (1), wobei die Polymerwerkstoff-Verarbeitungsmaschine (1) einen Zylinder (3) mit einer Extruderschnecke (4) und einer Austrittsdüse (10) umfasst, die die Stirnseite des Zylinders (3) zum Abfördern des verarbeiteten Polymerwerkstoffes begrenzt, wobei die Vorrichtung (11) zum Einspeisen des Treibmittels Folgendes umfasst:

   Abstimmungsmittel (14) zur Regulierung der Einspeisung des Treibmittels,
   eine Steuereinheit (17) zur Steuerung der Abstimmungsmittel (14),
   erste Messmittel (15) zur Messung des Drucks, mit dem das Treibmittel eingespeist wird, und
   zweite Messmittel (16) zur Messung des Drucks innerhalb der Verarbeitungsmaschine (1);
   die Steuereinheit (17) dient dazu, die Abstimmungsmittel (14) als eine Funktion des durch die ersten Messmittel (15) gemessenen Drucks, des durch die zweiten Messmittel (16) gemessenen Drucks und einer festgelegten Solldichte für den verarbeiteten Polymerwerkstoff zu steuern;
   **dadurch gekennzeichnet, dass**
   sich die zweiten Messmittel (16) an der Austrittsdüse (10) befinden, um den Druck im Innern der Verarbeitungsmaschine (1) an der Austrittsdüse (10) zu messen,
   wobei die Steuereinheit (17) Dateneingabemittel (18) besitzt, um die Daten bezüglich der Dichte des verarbeiteten Polymerwerkstoffs einzugeben sowie Datenverarbeitungsmittel (19), um eine Proportionalitätsfunktion zwischen der Dichte des verarbeiteten Polymerwerkstoffs und der Differenz zwischen dem von den ersten Messmitteln (15) gemessenen Druck und dem von den zweiten Messmitteln (16) gemessenen Druck auszuführen;
   wobei die Steuereinheit (17) dazu dient, die Abstimmungsmittel (14) auf der Grundlage der Proportionalitätsfunktion zu steuern.

2. Polymerwerkstoff-Verarbeitungsmaschine (1) gemäß Anspruch 1, wobei die Steuereinheit (17) dazu dient, die Abstimmungsmittel abhängig von der Differenz zwischen dem von den ersten Messmitteln (15) gemessenen Druck und dem von den zweiten Messmitteln (16) gemessenen Druck zu steuern.

3. Polymerwerkstoff-Verarbeitungsmaschine (1) gemäß Anspruch 1, wobei die Proportionalitätsfunktion eine inverse Proportionalitätsfunktion ersten Grades ist.

4. Polymerwerkstoff-Verarbeitungsmaschine (1) gemäß einem der vorstehenden Ansprüche, wobei die Abstimmungsmittel (14) dazu dienen, die Einspeisung des Treibmittels zu regulieren.

5. Methode zur Verarbeitung von Polymerwerkstoffen umfassend:

   einen Abförderungsschritt zum Extrudieren des verarbeiteten Polymerwerkstoffs durch einen Zylinder (3) mit einer Extruderschnecke (4) und einer Austrittsdüse (10), die die Stirnseite des Zylinders (3) begrenzt,
   einen Speiseschritt zum Hinzufügen des Treibmittels in den Polymerwerkstoff,
   einen ersten Messschritt zum Messen des Drucks des eingespeisten Treibmittels;
   wobei der Speiseschritt und der erste Messschritt gleichzeitig ablaufen;
   wobei das Verfahren **dadurch gekennzeichnet ist, dass** es Folgendes umfasst:
   einen zweiten Messschritt zum Messen des Drucks während des Abförderungsschritts an der Austrittsdüse (10) und
   einen Abstimmungsschritt zur Änderung der Differenz zwischen dem Druck des eingespeisten Treibmittels und dem Druck an der Austrittsdüse (10) als eine Funktion des während des ersten und des zweiten Messschritts gemessenen Drucks und einer festgelegten Solldichte des verarbeiteten Polymerwerkstoffs, und
   einen Einstellschritt zur Ausführung einer Proportionalitätsfunktion zwischen der Dichte des verarbeiteten Polymerwerkstoffs und der Differenz zwischen dem während des ersten Messschritts gemessenen Druck und dem während des zweiten Messschritts gemessenen Drucks, wobei der Druck des eingespeisten Treibmittels während des Abstimmungsschritts auf der Grundlage der Proportionalitätsfunktion reguliert wird.

6. Verfahren gemäß Anspruch 5, wobei der Abstimmungsschritt, der erste Messschritt und der zweite Messschritt gleichzeitig ablaufen.

7. Verfahren gemäß Anspruch 5 oder 6, wobei der Druck des Treibmittels während des Abstimmungsschritts als eine Funktion einer festgelegten Solldichte und der Differenz zwischen dem während des ersten Messschritts gemessenen Drucks und dem während des zweiten Messschritts gemessenen Drucks reguliert wird.

8. Verfahren gemäß Anspruch 7, wobei die Proportionalitätsfunktion eine inverse Proportionalitätsfunktion ersten Grades ist.

**9.** Verfahren gemäß einem der Ansprüche von 6 bis 8, wobei der Druck des eingespeisten Treibmittels während des Abstimmungsschritts reguliert wird.

## Revendications

**1.** Machine-outil pour matériau polymère (1), comprenant un dispositif (11) pour alimenter d'un agent gonflant une machine-outil pour matériau polymère (1) ; la machine-outil pour matériau polymère (1) comprenant un cylindre (3) doté d'un tire-bourre (4) et d'un orifice de débit (10) délimitant la face avant du dit cylindre (3) pour le déchargement du matériau polymère traité ; le dispositif (11) d'alimentation de l'agent gonflant comprenant :

un moyen de compensation (14) en mesure de régler l'alimentation de l'agent gonflant, un dispositif de commande (17) pour contrôler le dit moyen de compensation (14), un premier moyen de mesurage (15) pour relever la pression avec laquelle l'agent gonflant est alimenté, et un second moyen de mesurage (16) pour relever la pression dans la machine-outil (1) ; le dispositif de commande (17) étant en mesure de contrôler le dit moyen de compensation (14) sous forme d'une fonction basée sur la pression relevée par le premier moyen de mesurage (15), la pression relevée par le second moyen de mesurage (16) et une densité cible donnée pour le matériau polymère traité ; **caractérisée en ce que** le second moyen de mesurage (16) étant placé sur l'orifice de débit (10) pour mesurer la pression à l'intérieur de la machine-outil (1) au niveau de l'orifice de débit (10) où dit dispositif de commande (17) est doté de moyens d'entrée (18) en mesure de saisir les données relatives à la densité du matériau polymère traité et des moyens de traitement de données (19) pour traiter une fonction de proportionnalité entre la densité du matériau polymère traité et la différence entre la pression relevée par le premier moyen de mesurage (15) et la pression relevée par le second moyen de mesurage (16) ; le dispositif de commande (17) étant en mesure de contrôler le moyen de compensation (14) sur la base de la dite fonction de proportionnalité.

**2.** Machine-outil pour matériau polymère (1) selon la revendication 1, où le dispositif de commande (17) est en mesure de contrôler le moyen de compensation en fonction de la différence entre la pression relevée par le premier moyen de mesurage (15) et la pression relevée par le second moyen de mesurage (16).

**3.** Machine-outil pour matériau polymère (1) selon la revendication 1, où la dite fonction de proportionnalité est une fonction de proportionnalité inverse de premier degré.

**4.** Machine-outil pour matériau polymère (1) selon l'une des revendications précédentes, où le dit moyen de compensation (14) est en mesure de régler l'alimentation de l'agent gonflant.

**5.** Méthode pour traiter un matériau polymère, comprenant :

une étape de déchargement pour extruder le matériau polymère traité à travers un cylindre (3) doté d'un tire-bourre (4) et d'un orifice de débit (10) délimitant la face avant du dit cylindre (3), une étape d'alimentation pour ajouter l'agent gonflant au matériau polymère, une première étape de mesurage pour relever la pression de l'agent gonflant ajouté ; l'étape d'alimentation et la première étape de mesurage étant simultanées la méthode étant **caractérisée en ce qu'**elle comprend :

une seconde étape de mesurage pour relever la pression pendant l'étape de déchargement au niveau de l'orifice de débit (10), et une étape de compensation pour varier la différence entre la pression de l'agent gonflant ajouté et la pression au niveau de l'orifice de débit (10) sous forme d'une fonction des pressions relevées pendant les dites première et seconde étapes de mesurages et d'une densité cible donnée du matériau polymère, et une étape d'ajustage pour traiter une fonction de proportionnalité entre la densité du matériau polymère traité et la différence entre la pression relevée pendant la première étape de mesurage et la pression relevée pendant la seconde étape de mesurage ; pendant cette étape de compensation, la pression de l'agent gonflant ajouté étant réglée sur la base de la dite fonction de proportionnalité.

**6.** Méthode selon la revendication 5, où l'étape de compensation, la première et la deuxième étape de mesurage sont simultanées.

**7.** Méthode selon l'une des revendications 5 ou 6, où pendant la dite étape de compensation, la pression de l'agent gonflant ajouté est réglée sous forme d'une fonction d'une densité cible donnée et d'une différence entre la pression relevée pendant la première étape de mesurage et la pression relevée pendant la seconde étape de mesurage.

8. Méthode selon la revendication 7, où la dite fonction de proportionnalité est une fonction de proportionnalité inverse de premier degré.

9. Méthode selon l'une des revendications de 6 à 8, où pendant la dite étape de compensation, la pression de l'agent gonflant ajoutée est réglée.

**REFERENCES CITED IN THE DESCRIPTION**

**Patent documents cited in the description**

- EP 0995569 A2